# EUROPEAN PATENT APPLICATION

(11) **EP 4 538 159 A1**
(43) Date of publication of application: **16.04.2025**
(21) Application number: 23820114.9
(22) Date of filing: 08.06.2023
(51) Int. Cl.: B62M 3/08, A43B 5/14

(54) **STRUCTURE FOR CONNECTING PEDAL AND SHOE**

(30) Priority: 10.06.2022 KR 20220070570
(71) Applicant: Kim, Dae Hyun, Namyangju-si Gyeonggi-do 12183 (KR)
(72) Inventor: Kim, Dae Hyun, Namyangju-si Gyeonggi-do 12183 (KR)
(74) Representative: Goddar, Heinz J.
(86) International application number: PCT/KR2023/007866
(87) International publication number: WO 2023/239179

(57) **Abstract**

According to the present invention, it comprises: a pedal assembly, which is provided on a pedal and which includes a magnetic member and an assembly member provided on a part where a shoe assembly 200 is assembled; and the shoe assembly 200, which is provided on the shoe 20 stepping the pedal 10, and which includes a counter-magnetic member and an assembly member for being assembled to the magnetic member and the assembly member of the pedal assembly 100, respectively, at a portion where the pedal assembly 100 is assembled; wherein the counter-magnetic member and the assembly member of the shoe assembly 200 are assembled to the magnetic member and the assembly member of the pedal assembly 100, respectively, due to the magnetic force and concave/convex configuration, when the shoe 20 contacts the pedal 10, and wherein the counter-magnetic member and the assembly member are respectively released from the magnetic member and the assembly member by force, when the shoe is released from the pedal. Accordingly, the present invention provides the connection structure for the pedal and the shoe, which makes it possible to prevent and minimize the rider's accident by easy separation of the shoed from the pedal, at the time of stop for getting off the bicycle or at the time of stop under emergency situation.

## Description

### Field of Invention

The present invention relates to a connection structure for a pedal and shoe. More specifically, the present invention relates to the connection structure for the pedal and shoe, wherein a pedal provided for a bicycle, etc. includes a magnetic assembly, and a bottom of the shoe includes a counter-magnetic assembly, so that when the bottom of the shoe contacts the pedal, it may be possible to assemble and disassemble the counter magnetic assembly and the magnetic assembly thought magnetic force in an easy, fast and stable manner.

Generally, since the rider's foot is not fitted to a pedal of the bicycle when riding the bicycle, the foot is likely to slide from the pedal, and thus, it may be difficult to maintain an efficient pedaling posture.

Recently, a cleat pedal is used, which is secured to the rider's shoe for fixation, so that it may be possible to prevent slippage from the pedal and to use the force in an efficient manner when pedaling.

Since the cleat pedal is fixed to the bottom of the shoe, it increases pedaling by dispersing the stepping and pulling forces. Further, it helps to step the pedal at the same position, to thereby enable to maintain a stable posture. Thus, it helps with long-distance riding and uphill riding.

Also, the shoe and the cleat pedal have such configuration that when they are assembled with each other, a latching jaw provided on a bottom of the shoe may assembled to a latching piece of the cleat pedal, and that the latching jaw is released from the latching piece of the pedal by twisting the shoe in a certain angle.

However, the conventional cleat pedal for the shoe as explained above have such the problem that it is very inconvenient to correctly perform the assembly therebetween, since it is difficult to confirm the assembling operation between the latching jaw and the latching piece in a naked eye.

Also, the release operation between the latching jaw and the latching piece needs twisting of the shoe with a predetermined angle, to thereby allow the shoe and the latching jaw to be released from the latching piece. Thus, when the shoe abruptly stops without recognizing the assembled state of the cleat pedal or the shoe abruptly stops because of an unexpected situation, it causes problems that the shoe cannot be separated from the pedal, and the rider falls and is injured.

### [Prior Art Document]

(Patent Document 1) KR 10-2012-0029619
(Patent Document 2) KR 10-2367313
(Patent Document 3) KR 10-1847865
(Patent Document 4) KR 10-2384066

### Detailed Description of the Invention

### Technical Object

Thus, the object of the present invention is to provide the connection structure for the pedal and the shoe, wherein a magnetic assembly is provided at a pedal for a bicycle, etc., and a counter-magnetic assembly is provided at a bottom of the shoe, so that it makes possible to stably, easily and swiftly assemble the counter-magnetic assembly to the magnetic assembly by means of magnetic force, when the bottom of shoe contacts the pedal, and wherein the shoe is easily separated from the pedal when the bicycle stops in a common situation or when the bicycle stops in the emergency situation, so that it makes possible to prevent and minimize any safety accident to the rider.

Meanwhile, the object of the present invention is not restricted to the above-mentioned object, and other objects will be obviously understood by one of ordinary skill in the art in view of the description below.

### Summary of the Invention

According to the present invention, a connection structure for a pedal and shoe is provide, which comprises: a pedal assembly, which is provided on a pedal and which includes a magnetic member and an assembly member provided on a part where a shoe assembly is assembled; and the shoe assembly, which is provided on the shoe stepping the pedal, and which includes a counter-magnetic member and an assembly member for being assembled to the magnetic member and the assembly member of the pedal assembly, respectively, at a portion where the pedal assembly is assembled; wherein the counter-magnetic member and the assembly member of the shoe assembly are assembled to the magnetic member and the assembly member of the pedal assembly, respectively, due to the magnetic force and concave/convex configuration, when the shoe contacts the pedal, and wherein the counter-magnetic member and the assembly member are respectively released from the magnetic member and the assembly member by force, when the shoe is released from the pedal.

Hear, the pedal assembly comprises: a pedal base; a pedal base latching piece which is formed to extend from the pedal base and which is inserted into a lower part of the latching piece of the pedal, to thereby be latched and supported; a pedal base latching jaw, which is formed as a concave groove structure, while having a step at the pedal base and which is latched and supported on a lower part of the latching piece of the pedal; a magnet insert groove, which is formed as a concave groove structure on an upper face of the pedal base to thereby allow the magnet to be inserted therein; a pedal metal plate, which is assembled to cover the upper surface of the pedal base to thereby protect the magnet inserted into the magnet insert groove and allow magnetic force of the magnet to transmit outward, a fixed protrusion, which protrudes from an upper face of the pedal base latching piece and which is formed with a protrusion fitting groove; a step fitting groove, which has a step on the pedal base adjacent to the protrusion fitting groove and which is formed to have a concave groove structure; a pair of inclined protrusion, which protrudes upward on an edge of the pedal base; and a pair of lateral fitting grooves, which is formed as the concave groove structure on an edge of the pedal base.

Also, it is preferred that the shoe assembly comprises: a shoe base; a shoe base header formed to extend from the shoe base; an assembly hole, which is formed at a central part of the shoe base and which allows a bolting member to fit the shoe base to the shoe; a shoe metallic plate assembled to a lower face of the shoe base, while covering the same; an insert protrusion protruding on a lower face of the shoe base header; a step protrusion protruding, along with a step on the shoe base; a pair of inclined fitting grooves, formed to have a concave groove structure at an edge of the shoe base; and a pair of side protrusions , which protrudes toward a lower side of edge of a lateral area of the shoe base.

### Effect of the Invention

Thus, according to the present invention, by means of the magnetic assembly unit provided on the pedal of the bicycle, etc., and the counter-magnetic assembly unit provided on the bottom of shoe, it enables the counter-magnetic assembly unit to be coupled to the magnetic assembly unit in easy, fast and stable way through magnetic force, when the bottom of the shoe contacts the pedal. Also, when stopping the bicycle for getting off or when stopping the bicycle in an emergency state, it is possible to separate the shoe and the pedal with ease, so that the prevention and the minimization of safety accident may be possible for the rider.

On the other hand, the effect of the present invention is not limited to the above, and other advantages, which are not mentioned above, will be clearly understood by one of ordinary skill in the art from the recitations in the claims.

### Brief Description of Drawings

FIG.1 is a planar perspective view, which shows a coupling state of the pedal coupling body and a shoe coupling body in a pedal and shoe connecting structure in accordance with one preferred embedment of the present invention.
FIG. 2 is an exploded view of FIG. 1.
FIG. 3 is a bottom view of FIG. 1.
FIG. 4 is an exploded view of FIG. 3.
FIG. 5 is a front view of FIG. 1
FIG. 6 is a side cross-sectional view of FIG. 1
FIG. 7 is a front view showing the pedal coupling body of FIG.1.
FIG. 8 is a side cross-sectional view showing the pedal coupling body of FIG. 1.
FIG. 9 is a front view showing the shoe coupling body of FIG. 1.
FIG. 10 is a side cross-sectional view showing the shoe coupling body of FIG. 1.

### Best Mode

Hereinbelow, a preferred embodiment of the present invention will be discussed with reference to the drawings enclosed.

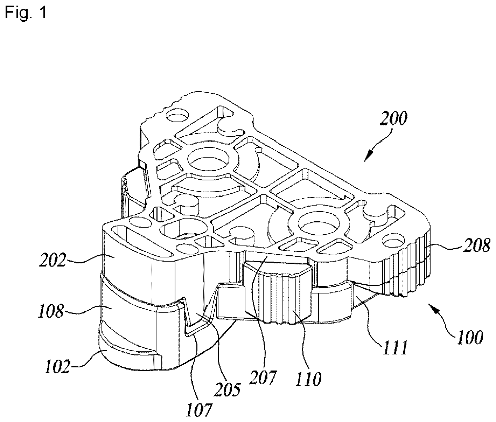

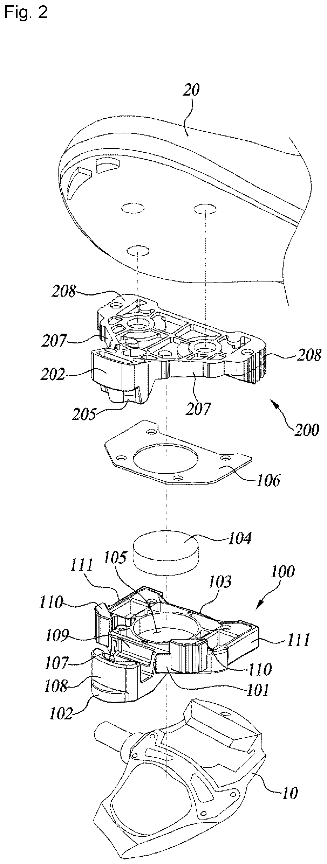

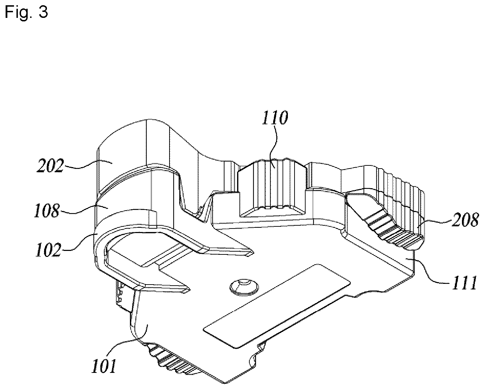

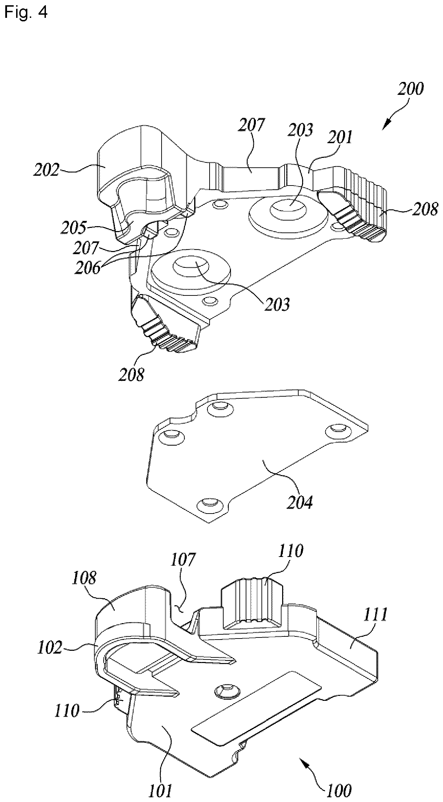

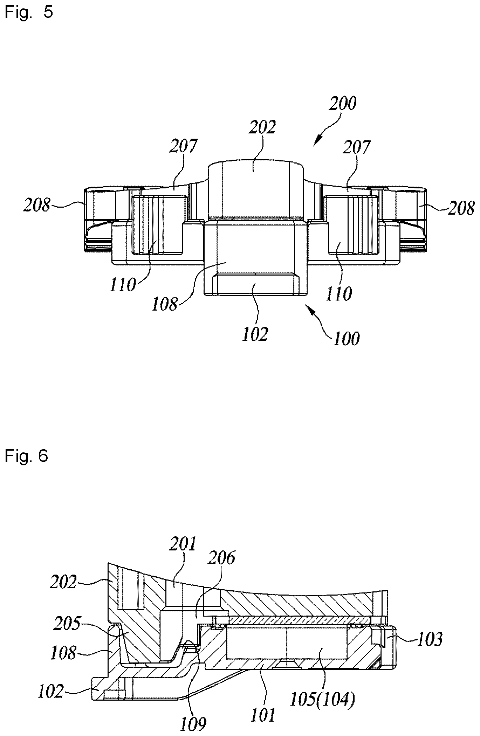

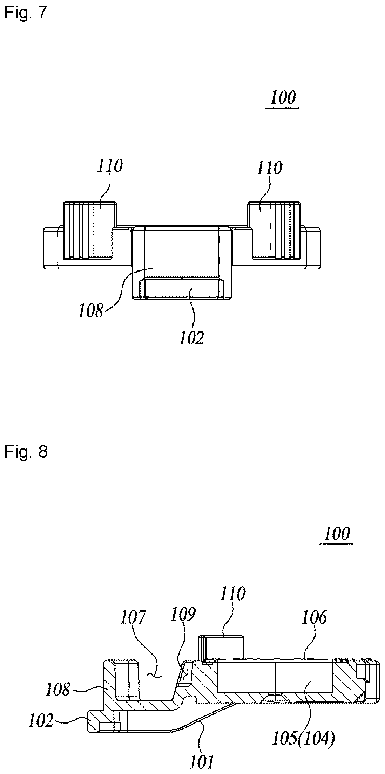

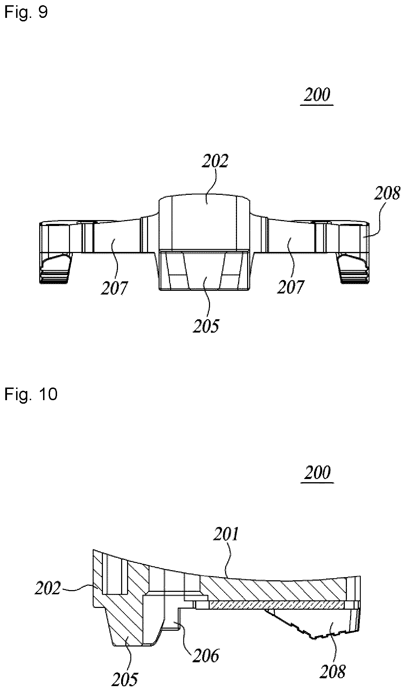

As shown in FIGS. 1-10, the connection structure for the pedal and the shoe according to one of the preferred embodiments comprises: a pedal assembly 100, which is provided on a pedal 10 including a cleat pedal, and which includes a magnetic member and an assembly member at a portion where a shoe assembly 200 is assembled, and a shoe assembly 200, which is provided on the shoe 20 pressing the pedal 10, and which includes a counter-magnetic member and an assembly member for being assembled to the magnetic member and the assembly member of the pedal assembly 100, respectively, at a position where the pedal assembly 100 is assembled, wherein the counter-magnetic member and the assembly member of the shoe assembly 200 are assemble to the magnetic member and the assembly member of the pedal assembly 100, respectively, by means of magnetic force and concave/convex structure, when the shoe 20 contacts the pedal 10, and, wherein the counter-magnetic member and the assembly member of the shoe assembly are released from the magnetic member and the assembly member of the pedal by force, respectively, when the shoe 20 is released from the pedal 10.

It is preferable that the pedal 10 may comprise all kinds of pedal means provided for a bicycle, etc., and that the pedal is a cleat pedal formed with a latching piece, to which a latching jaw, a coupler or a cleat may be latched or from which the latter may be released. Here, the latching piece may have such a configuration that enables the pedaling with the use of the shoe 20 without the latching jaw, the coupler or the cleat; in other words, it may have the configuration in that an adaptor (or plate) for converting the cleat pedal to a common pedal is latched thereto or released therefrom. The above configuration is well known in the art, and thus, the detailed description with respect thereto is omitted.

A shoe 20 comprises all kinds of shoes currently used, which allow the riders to step pedal means installed in the bicycle, etc. It is preferred that the shoe is a road shoe, which has a latching jaw, a coupler or a cleat that may be latched to or released from a latching piece of a cleat pedal, wherein the coupler or the cleat may have a structure selectively mounted from a bottom of the shoe. The detailed explanation will be omitted, since the above configuration is well known in the art.

A pedal assembly 100 is magnetic assembly means, which are formed to be mountable to a pedal 10 including a cleat pedal and which have a magnetic member and an assembly member at an assembly part to which the shoe assembly 200 is assembled, and have a rectangular shape assembled below a trapezoidal shape, wherein the pedal assembly 100 comprises: a pedal base in the shape of a polygon, wherein a lower side of a rectangular shape is formed to be concavely rounded toward an upper side; a pedal base latching piece 102, which is formed to extend from an upper side of the pedal bas 101 and which is inserted into a lower side of the latching piece of the pedal 10, to thereby be latched and supported; a pedal base latching jaw 103, which is formed as a concave groove, while having a step at a lower side of the pedal base 101, and which is inserted into a lower part of the latching piece of the pedal 1, to thereby be latched and supported; a magnet insert groove 105 which is formed with a concave groove on an upper face of the pedal base 101 and into which the magnet 104 is inserted; a pedal metallic plate 106, which is coupled to cover an upper face of the pedal base 101 to thereby protect the magnet 105 inserted in the magnet inserted groove 105 and which allows magnetic forces of the magnet 104 to be transferred outward; a fixing protrusion 108, which protrudes above the pedal base latching piece 102 with a predetermined height and shape, to thereby form a protrusion fitting groove 107 between an upper side of the pedal base 101 and the pedal base latching piece 102; a step fitting groove 109, which is formed as a concave structure, while having a step on the upper side of the pedal base 101 adjacent to the protrusion fitting groove 107; and a pair of lateral fitting grooves 111, each of which is formed as a concave groove structure at an edge of lateral area rectilinearly located, with a predetermined angle from predetermined height and shape, from either upper side of the pedal base 101 to an upper side of a sloped area edge inclinedly located with a predetermined angle.

Here, the pedal base 101, the pedal base latching piece 102 and the pedal base latching jaw 103 have the shape and the configuration that may be replaceable with an adapter in a known cleat pedal, and they are made of synthetic resin material. Thus, the above elements can be attached to or removed from the pedal in a known manner, and thus, it may be possible to significantly improve the conveniences in manufacturing and in use.

The magnet 104 is positioned within a magnet insert groove 105, and then it is fixed to an upper face of the pedal base 101 through the pedal metallic plate 106. The magnet generates magnetic forces through the pedal metallic plate 106, and thus, allows a shoe metallic plate 204 to be in a secured state through magnetic force, wherein the shoe metallic place 204 is an assembly member of the shoe assembly 200 as described later.

Accordingly, by way of the pedal assembly 100, it may be possible to be relatively and simply configured on the conventional pedal 10, such as the cleat pedal, etc., so that the conveniences in manufacturing and in use can be greatly improved.

The shoe assembly 200 is the counter-magnetic assembly means, which is detachably configured on a bottom of the shoe 20 assembled to the shoe 10, wherein the counter magnetic member and the assembly member are included at the assembly part assembled to the pedal assembly 100, and wherein a rectangular shape is assembled to an underside of a trapezoidal shape. Here, it comprises: a shoe base 201, having a polygonal shape, wherein a lower side in the form of rectangular shape is concavely rounded toward an upper side; a shoe base header 202, which is formed to extend from an upper side of the shoe base 201, and which corresponds to the pedal base latching piece 102 of the pedal assembly 100; assembly holes 203 for a road shoe, which are punctured in plural at a center part of the shoe base 201 and which has such configuration as the shoe base 201 being assembled to the cleat pedal through the bolting member or assembly holes 203 for being detachably fixed to the cleat assembled part; a shoe metallic plate 204, which is assembled to cover a lower face of the shoe base 201, and which is assembled to the magnet 104 of the pedal base 101 and the pedal metallic plate 106 by means of magnetic forces, when the shoe base 201 approaches to the pedal base 101; an insert protrusion 205, which protrudes with a predetermined height from a lower face of the shoe base header 202, and in the shape corresponding to the protrusion fitting groove 107 of the pedal base 101, to thereby be assembled to the protrusion fitting groove 107; a step protrusion 206, which protrudes with a step from an upper side of the shoe base 201, and which fits to a step fitting groove 109 of the pedal base 101; a pair of inclined fitting groove 207, which is formed in a concave groove configuration at an edge of an inclined part slantly positioned with a predetermined angle from either side of an upper line of the shoe base 201, and to which the inclined protrusion 110 of the pedal base 101 is assembled; and, a pair of lateral protrusions 208, each of which protrudes with a predetermined angle from either side of a slope part of the shoe base 201 toward a lower side of a lateral side edge rectilinearly located, along with a predetermined height and shape, and which are assembled to a lateral side fitting groove 111 of the pedal base 101.

Here, it is preferred that the shoe base 201 includes synthetic resin material, and that the upper face has a round shape to tightly contact a bottom of the shoe 20.

Also, the shoe metallic plate 204 is such that it covers bolting holes 203 and it is fixed to the shoe base 201, after the shoe base 201 is fixed to the shoe 20 while the bolting member penetrates the assembly hole 203. Accordingly, it may prevent the bolting member from being released from the shoe 20 due to friction with respect to the pedal assembly 100 when repetitive pedaling, and thus, it may be possible to secure the bolting member to the shoe 20 more stably.

Further, a pair of side face protrusions 208 of the shoe base 201 have concave-convex patterns on a lower surface in order to minimize wear of a side protrusion 208, when the rider directly exerts pressure on the ground with his foot, while the side protrusions fixed to the shoe 20, and the stepping surface and the inclined surface are formed in a continuous manner. When getting off the bicycle, the stepping surface or the inclined surface contacts the ground, along with the insert protrusion 205, so that it enables the stable walking through prevention of slippage.

Here, each of the protrusion for insertion 205 and the protrusion at the side 208 may have urethane material in order to prevent slip when contacting the ground, and they may be molded to the shoe base 201 in the manner of the double injection.

Thus, the shoe assembly 200 may be comparatively simply provided on the shoe 20, which is combined with the conventional pedal 10, such as the cleat pedal, so that it may be possible to improve conveniences in manufacturing and use.

On the other hand, according to the present application, if the shoe metallic plate 204, which is an assembly member of the shoe assembly 200, is magnetically assembled to the pedal metallic piece 106 and the upper face magnet 104 of the pedal base 101, the protrusion fitting groove 107 of the fitting protrusion, a step fitting groove 109, a protrusion 110 of the inclined part, and a lateral fitting groove 111 of the pedal assembly 100 may be respectively assembled to the insert protrusion 205, the step protrusion 205, an inclination insert groove 207 and a lateral protrusion 208 of the shoe assembly 200 to form a concave/convex configuration..

Here, the prevention of slippage and the maintenance of stable state for assembly may be possible through the assembly configuration of a magnet 104 and a plurality of concave/convex structure, i.e., the protrusion fitting groove 107 of the fitting protrusion 108, a step fitting grove 109, a slant protrusion 110 and a side fitting groove 111 of the pedal assembly 100, and the elements corresponding thereto, such as an insert protrusion 205, a step protrusion 206, a slant fitting groove 207 and side protrusion 208 of the shoe assembly. Also, the maintenance may be conveniently performed by replacement of the magnet 104.

Also, if the shoe 20 is temporarily separated from the pedal 10 while pedaling, and then if the rider intends to step the pedal again, the above assembly structure with the concave/convex elements may be easily inserted into the corresponding positions due to mutual magnetic forces, when a shoe metallic plate 204 of the shoe assembly 200 is adjacent to the magnet 104 of the pedal assembly 100 and the pedal metal plate 106, while the rider puts the shoe 20 on the pedal 10, without any operation to assemble the elements, after the rider correctly grasps positions of the assembly elements with the concave/convex structure one by one with the naked eye. Thus, it may be possible to provide the improved conveniences and safety.

Also, in the case of the pedal assembly 100 and the shoe assembly 200, the above-explained assembly configuration with the plurality of the concave/convex structures is disposed in an upper side, a slope and a lateral side of the base member. Accordingly, even when forces act in many directions during the pedaling, it may prevent slippage and separation of the assembled state by way of generating anti-force thereto. Also, there is not provided any structure therefor on the lower side of the base member, and thus, if the shoe 20 should be separated from the pedal 20 owing to an unexpected situation during the riding, it can be easily separated with force above a critical value. Thus, the accident could be prevented.

Hereinafter, the connection structure for the pedal and the shoe according to the preferred embodiment of the present invention may operate as explained in the following.

First, the pedal assembly 100 is installed on the pedal 10.

Here, it is preferred that the pedal 10 is a well-known pedal. In such a case, the pedal assembly 100, which is positioned instead of the adaptor for the cleat pedal, is mounted with the pedal base 101 through the pedal base latching piece 102 and the pedal base latching jaw 103.

Also, the shoe assembly 200 is installed on the shoe 20.

Here, it is preferred that the shoe 20 is a rod shoe formed with a latching jaw or a coupler, which may be latched with or released from a known cleat pedal. In such a case, the pedal assembly 200 may be mounted to the bottom of the shoe 20 by means of bolting member penetrating an assembly hoe 203, in a state that it is positioned at an assembly hole of the rod shoe or a cleat assembly part.

On the other hand, in a state that the pedal assembly 100 is assembled to the pedal 10 and that the shoe assembly 200 is assemble to the bottom of the shoe 20, if the shoe 20 approaches the pedal 10 for pedaling, the shoe metallic plate 204 of the shoe assembly 200 is magnetically assembled to the magnet 104 of the pedal assembly 100 due to magnetic force of the pedal metallic plate 106.

Also, as described above, when the shoe base 201 of the shoe assembly 200 is magnetically assembled to the pedal base 101 of the pedal assembly 100, the insert protrusion 205, a step protrusion 206, an inclination insert groove 207, and a lateral protrusion 208 of the shoe assembly are respectively inserted into and assembled to the protrusion fitting groove 107 of the fixing protrusion 108, a step fitting groove 100, an inclination protrusion 110, and a lateral fitting groove 111 of the pedal assembly 100, so that it may be possible to minimize slippage when pedaling, and to maintain stably assembled state.

Further, in the situation described above, the shoe 20 is separated from the pedal 10, if the shoe 20 is separated from the pedal 10, while the rider gets off the bicycle or in an unexpected situation, the assembled state between the shoe assembly 200 and the pedal assembly 100 due to the magnetic force and the concave-convex structure may be easily disassembled, only with the rider's simple operation of separating the shoe 20 from the pedal 10.

Thus, according to the present invention, the pedal 10 provided for the bicycle, etc., includes the pedal assembly 100 serving as the magnetic assembly means, and the shoe 20 includes the shoe assembly 200 on its bottom, which serves as the counter magnetic assembly means. Accordingly, when the bottom of the shoe 20 contacts the pedal 10, the magnetic member and the concave/convex structure of the pedal assembly 100 are assembled to and released from the counter magnetic member and the concave-convex structure of the shoe assembly 200, through magnetic force and the concave-convex structures. Thus, it is possible to attain easy, fast and stable assembly and disassembly, so that conveniences in use may be improved and accidents may be prevented.

The above description describes the specific embodiment of the present invention, but many variants may be embodied without departing from the scope of the present invention. Thus, the scope of the present invention shall not be defined by the above-described embodiment, but it shall be defined by the claims of the present application and by equivalents to the claims.

## Claims

1. A connection structure for a pedal and a shoe, **characterized in that** it comprises:
a pedal assembly 100, which is provided on a pedal 10 and which includes a magnetic member and an assembly member provided on a part where a shoe assembly 200 is assembled; and
the shoe assembly 200, which is provided on the shoe 20 stepping the pedal 10, and which includes a counter-magnetic member and an assembly member for being assembled to the magnetic member and the assembly member of the pedal assembly 100, respectively, at a portion where the pedal assembly 100 is assembled;
wherein the counter-magnetic member and the assembly member of the shoe assembly 200 are assembled to the magnetic member and the assembly member of the pedal assembly 100, respectively, due to the magnetic force and concave/convex configuration, when the shoe 20 contacts the pedal 10, and
wherein the counter-magnetic member and the assembly member are respectively released from the magnetic member and the assembly member by force, when the shoe 20 is released from the pedal 10.

2. The connection structure for the pedal and the shoe as claimed in claim 1, **characterized in that** the pedal assembly 100 comprises:
a pedal base 101;
a pedal base latching piece 102 which is formed to extend from the pedal base 101 and which is inserted into a lower part of the latching piece of the pedal 10, to thereby be latched and supported;
a pedal base latching jaw 103, which is formed as a concave groove, while having a step at the pedal base 101 and which is latched and supported on a lower part of the latching piece of the pedal 10;
a magnet insert groove 105, which is formed to have the concave structure on an upper face of the pedal base 101 to thereby allow the magnet 104 to be inserted therein;
a pedal metal plate 106, which is assembled to cover the upper surface of the pedal base 101 to thereby protect the magnet inserted into the magnet insert groove 105 and allow magnetic force of the magnet 104 to transmit outward,
a fixed protrusion 108, which protrudes from an upper face of the pedal base latching piece 102 and which is formed with a protrusion fitting groove 107;
a step fitting groove 109, which has a step on the pedal base 101 adjacent to the protrusion fitting groove 107 and which is formed to have a concave groove structure;
a pair of inclined protrusion 110, which protrudes upward on an edge of the pedal base 101; and,
a pair of lateral fitting grooves 111, which is formed as the concave groove structure on an edge of the pedal base 101.

3. The connection structure for the pedal and the shoe as claimed in claim 1,
**characterized in that** the shoe assembly 200 comprises:
a shoe base 201;
a shoe base header 202 formed to extend from the shoe base 201;
an assembly hole 203, which is formed at a central part of the shoe base 201 and which allows the shoe base 201 to be fixed on the shoe 20;
a shoe metallic plate 204 assembled to a lower face of the shoe base 201, while covering the same;
an insert protrusion 205 protruding on a lower face of the shoe base header 202;
a step protrusion 206 protruding along with a step on the shoe base 201;
a pair of inclination fitting grooves 207, formed to have a concave groove structure along an edge of the shoe base 201; and
a pair of lateral protrusions 208, which protrudes toward a lower side of edge of a lateral area of the shoe base 201.

4. The connecion structure for the pedal and the shoe as claimed in claim 3, **characterized in that** the protrusions 208 of the lateral side are formed with concave/convex patterns on its lower face, in order to minimize wear, when the rider directly touches the ground on his feet, in a state of the protrusions being fixed to the shoe 20, and it enables stable walk through the prevention of slippage by contacting ground, along with an insert protrusion 205.
